# EUROPEAN PATENT APPLICATION

(11) **EP 4 474 270 A1**
(43) Date of publication of application: **11.12.2024**
(21) Application number: 23178417.4
(22) Date of filing: 09.06.2023
(51) Int. Cl.: B64C 3/18

(54) **REINFORCEMENT FOR LAMINATED EDGE SECTIONS**

(71) Applicant: Airbus Operations GmbH, 21129 Hamburg (DE)
(72) Inventor: SEACK, Oliver, Hamburg (DE); ENDER, Tobias, Hamburg (DE)

(57) **Abstract**

The present invention relates to a reinforcing device. In order to provide an alternative improvement in the structural stability of laminated components, a reinforcing device (10) is provided. The reinforcing device comprises a body structure (12) having an abutment surface (14) and at least one fastening area (16). The abutment surface extends along a first direction. In a cross-sectional direction, transverse to the first direction, the abutment surface comprises a rounded contour section (18) such that the abutment surface is configured to conform with a concave edge section (20) of a laminated structural member (22). The at least one fastening area is provided at the body structure opposite to the abutment surface. The at least one fastening area is configured to secure the abutment surface against the concave edge section of the laminated structural member.

## Description

### FIELD OF THE INVENTION

The present invention relates to stabilization for curved sections of a laminated material; more specifically, the invention relates to a reinforcing device, to a reinforcing arrangement and to a method for introducing loads to a laminated structural member under preservation of its structural integrity.

### BACKGROUND OF THE INVENTION

Components of a vehicle like an aircraft may comprise laminated layers. These components may be given a structural integrity through an integral manufacturing of the laminated layers to provide for their stability. Certain parts of the integrally manufactured components may be exposed to forces acting on the vehicle and in consequence on the laminated layers.

### SUMMARY OF THE INVENTION

There may thus be a need for an alternative improvement in the structural stability of laminated components.

The object of the present invention is solved by the subject-matter of the independent claims; further embodiments are incorporated in the dependent claims. It should be noted that the following described aspects of the invention apply also for the reinforcing device, for the reinforcing arrangement and for the method for introducing loads to a laminated structural member.

According to the present invention, a reinforcing device is provided, comprising a body structure. The body structure has an abutment surface and at least one fastening area. The abutment surface extends along a first direction. In a cross-sectional direction, transverse to the first direction, the abutment surface comprises a rounded contour section such that the abutment surface is configured to conform with a concave edge section of a laminated structural member. The at least one fastening area is provided at the body structure opposite to the abutment surface. The at least one fastening area is configured to secure the abutment surface against the concave edge section of the laminated structural member.

As an effect, the abutment surface acts as a corset to preserve the structural integrity of the concave edge section.

As an advantage, more punctual force can be introduced to concave edge sections of laminated structural members in a targeted manner to prevent delamination.

By placing the reinforcing device, i.e., corner fittings, into the corners, i.e., concave edge sections, e.g. between spar and skin of the laminated structural member, in direct contact with a radius of the concave edge sections, peel or unfolding forces will be directly counteracted by the corner fittings.

As an advantage, the reinforcing device provides increased safety against structural failures due to its ability to improve the strength of the concave edge section, i.e., CFRP (*Carbon Fiber Reinforced Polymer*) radius, against unfolding.

As a further advantage, the load at which unfolding in the radius would take place, can be significantly increased, or with an optimum orientation of bolts at the fastening area also totally avoided.

According to the present invention, also a reinforcing arrangement is provided, comprising at least one reinforcing device according to the previous example and at least one fastening setup. The at least one fastening setup is configured to secure the at least one reinforcing device against a concave edge section of a laminated structural member.

As an effect, for the assembly process of the reinforcing arrangement, open ends of the laminated structural member, e.g., an integrally manufactured composite box, can be accessed.

As an advantage, the laminated structural member, e.g., a closed CFRP box, has not to be opened by milling a huge cut-out into the laminated structural member, respectively its skin, which weakens the structure of the box significantly, since the cover of the cutout is a structural, load-carrying cover, with a high number and double row of fasteners.

As a further advantage, the reinforcing device requires only smaller holes for the bolts or rivets joining the internal reinforcing device with external fittings at the laminated structural.

According to an example, two reinforcing devices are provided, and the bolt structure comprises two bolts. The at least one fastening element is configured as a shared fastening element. The two reinforcing devices are configured to be secured against each other at either side of abutting convex edge sections that form a spar. The reinforcing devices are fastened by the two bolts to the shared fastening element abutting the laminated structural member. The two bolts protrude from either of the reinforcing devices such that their bolt hole axes cross at a crossing point. Preferably, the crossing point is at the apex area.

As an advantage, reinforcing devices can act synergistically in focusing a holding force on the concave edge sections of a spar.

As an advantage, force or load is distributed more equally at a spar.

According to an example, two reinforcing devices are provided, and the bolt structure comprises a U-shaped bolt structure. The at least one fastening element is configured as a main fastening element. The two reinforcing devices are configured to be secured against each other at either side of abutting convex edge sections that form a spar. The U-shaped bolt structure comprises fastening arms. The fastening arms extend from each of the reinforcing devices and join at their crossing point at the apex area, in an opposing direction to the spar. The U-shaped bolt structure is configured to be fastened at the crossing point by the main fastening element at the laminated structural member, thereby exerting a holding force on the two reinforcing devices.

As an advantage, only a single main fastening element is required.

As a further advantage, only a single main fastening element needs to be fastened at the laminated structural member.

As a further advantage, more structural integrity of the laminated structural member is preserved.

According to an example, the body structure comprises at least one flange. The at least one flange is provided at the body structure distal to the rounded contour section. The at least one flange is configured to hold the reinforcing device indirectly against the concave edge section with the at least one shear rivet.

According to an example, at least two reinforcing devices are provided. Each of the at least two reinforcing devices provides a fastening area formed to receive a support post. The fastening setup comprises at least one support post, a bolt structure and fastening elements. The at least one support post is fastened to the laminated structural member by the bolt structure and the fastening elements. The at least one support post is configured to hold one of the at least two reinforcing devices to a concave edge section by the other of the at least two reinforcing devices abutting to an opposing concave edge section.

According to the present invention, also a method for introducing loads to a laminated structural member under preservation of its structural integrity is provided. The method comprises the following steps:
- Providing at least one laminated structural member having concave edge sections;
- Attaching reinforcing devices of a reinforcing arrangement to the concave edge sections;
- Fastening of the reinforcing devices by a fastening setup and generating a force; and
- Focusing, by the reinforcing arrangement, the force on abutment surfaces of the reinforcing devices to counteract delamination forces at the concave edge sections.

According to an aspect, the laminated structure is provided with holding parts placed abutting the rounded corner parts of the laminated structure that are subject to delaminating forces. The holding parts counteract these forces. To apply the holding forces, the holding parts are clamped in their position.

According to an aspect, bar-like elements are provided, i.e., the reinforcing devices, which are arranged preferably pairwise on each side of a spar in the inside corner/edge, i.e., the concave edge section, between spar and skin of an integrally manufactured multispar box, i.e., the laminated structural member. In an option, only one bar-like element is provided on one side. The bar-like elements are called "Corner Fittings". The internal corner fittings act as counterparts to an external load introduction fitting on the outer side of the integrally manufactured multispar box. The internal corner fittings and the external load introduction fitting are structurally joined by bolts and/or rivets running through bores on the skin of the box. The internal fittings, the "corner fittings", counteract the peel respectively unfolding forces. Different orientations of the bolts connecting internal and external fittings are possible. The orientation influences the strength of the reinforcing devices with respect to the onset of failure by unfolding.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a general scheme of a cross-section of an example of a reinforcing device.
Fig. 2 schematically shows a cross-section of an example of a reinforcing device.
Figs. 3A and 3B schematically show cross-sections of examples of a reinforcing device with holding sections configured as lever.
Fig. 4 schematically shows a general scheme of a cross-section of an example of a reinforcing arrangement.
Fig. 5 schematically shows a cross-section of an example of a reinforcing arrangement with crossing bolts and a shared fastening element as fastening setup.
Fig. 6A schematically shows a general scheme of a cross-section of an example of a reinforcing arrangement with a U-shaped bolt structure.
Figs. 6B, 6C, 6D, 6E, 6F, 6G, 6H schematically show cross-sections of examples of a reinforcing arrangement with a U-shaped bolt structure configured as flexible belt structure 126.
Fig. 6I schematically shows a cross-section of an example of a reinforcing arrangement with a reversed U-shaped bolt structure.
Fig. 6J schematically shows a cross-section of an example of a reinforcing arrangement with a U-shaped bolt structure configured as U-bracket.
Figs. 6K and 6L schematically show cross-sections in different directions of an example of a reinforcing arrangement wherein the U-shaped bolt structure comprises a plate and the end of the plate protrudes into another U-shape.
Fig. 6M schematically shows a cross-section of an example of a reinforcing arrangement wherein the U-shaped bolt structure comprises Y-shaped bolt.
Fig. 6N schematically shows an example of the Y-shaped bolt.
Fig. 7A schematically shows an example of a reinforcing device with a flange.
Fig. 7B schematically shows an example of a reinforcing arrangement with reinforcing devices having flanges and shear rivets.
Fig. 7C schematically shows an example of a reinforcing arrangement with perpendicular flanges abutting a spar.
Fig. 8A schematically shows an example of a reinforcing arrangement with at least one support post.
Fig. 8B schematically shows an example of a reinforcing arrangement with a support post and magnetic reinforcing devices.
Fig. 9 shows basic steps of an example of a method for introducing loads to a laminated structural member under preservation of its structural integrity.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

In an example, an important part of an integrally manufactured CFRP multispar box are the CFRP radii between spars and upper respectively lower skins of the multispar boxes. An example application for the reinforcing arrangement described herein is in the context of beam-like structures, like an aircraft flap, aileron or rudder, e.g. bended by an external load. These structures are mounted to a support structure. At the interface of the support structure and the structure, spanwise forces resulting from bending are crossing the resulting reaction forces in vertical direction. If such an interface, between the support structure and the structure shall be designed as an integral composite fitting with conventional 2D-fabrics or NCFs, it is complex to achieve the required strengths, because the load introduction area will be loaded out-of-plane by the peeling forces resulting from the cross-like arrangement of force flux planes at the structures. Peeling forces may cause failure of composite fitting of the structures due to the composite's low out-of-plane strength. Radii at the composite fitting can be affected by a mechanism called "unfolding": If a radius, e.g. in an L-angle structure, formed from CFRP layers will be subject to load, the radius will effectively be bended. Bending of a curved structure, i.e., radius, may induce also out-of-plane or peel-of stresses in the radius, which can cause delamination of the CFRP layers in the radius area. Loads applied to the radius zone like tension, transverse force, bending moment, result in delamination caused by unfolding. In multispar boxes structures, especially the highly loaded radii in the load introduction areas are prone to being affected by unfolding.

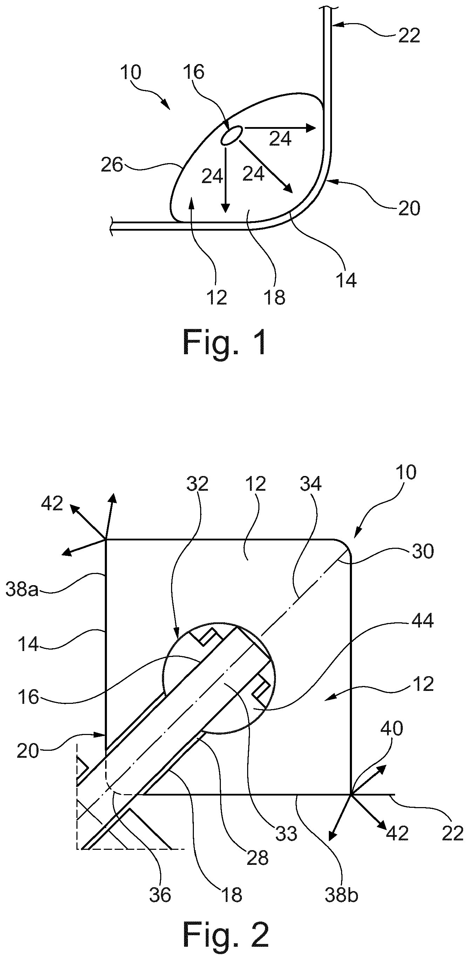

Fig. 1 schematically shows a general scheme of a cross-section of an example of a reinforcing device 10. The reinforcing device 10 comprises a body structure 12 having an abutment surface 14 and at least one fastening area 16. The abutment surface 14 extends along a first direction. In a cross-sectional direction, transverse to the first direction, the abutment surface 14 comprises a rounded contour section 18 such that the abutment surface 14 is configured to conform with a concave edge section 20 of a laminated structural member 22. The at least one fastening area 16 is provided at the body structure 12 opposite to the abutment surface 14. The at least one fastening area 16 is configured to secure, shown by arrows 24, the abutment surface 14 against the concave edge section 20 of the laminated structural member 22.

The term "reinforcing device" relates to providing a holding force, shown by the arrows 24, in order to strengthen the laminated structural member 22 in Fig. 1. The reinforcing device 10 can also be referred to as force transmission device, or force introduction device, or load introduction device.

In an example, the reinforcing device 10 is configured to provide a mechanical force, e.g., by transmitting of conducting the force from a point A to a point B, not shown in Fig. 1, and vice versa in order to hold the laminated structural member 22 such that a delamination is prevented.

The term "body structure" refers to an object structure, which acts as the structural part. The body structure 12 can be provided as a framework or 3D grid-like structure, or as a beam-like structure, or as a rack, or also as a solid structure, e.g., forming a volume filled by a material that comprises a three-dimensional shape. The body structure 12 of Fig. 1 can also be understood as structural unit, or structural component.

In an example, the body structure 12 is a frame, a rail, a rack, a strip a border, a ridge, a bracket, a band, a corner, or a fitting or a corner fitting.

In an example, the body structure 12 provides a corset.

In an example, the body structure 12, besides the at least one fastening area 16, comprises recesses, deepenings, depressions and cavities in order to save weight, not shown in Fig. 1.

In an example, the body structure 12 might contain gradual variations in its rigidity, thermal conductivity or other material parameters.

In an example, the body structure 12 is made from at least one of the group of aluminum, titanium, polymer, resin, fiber material, CFRP material or a composite material.

The term "abutment surface" refers to a face of an object able to push, also shown by the arrows 24 in Fig. 1, or bump against another object. The abutment surface 14 is configured to exchange forces with the other object.

In an example, the abutment surface 14 is configured to adhere to another object.

In an example, the abutment surface 14 encloses recesses.

In an example, the abutment surface 14 encloses the body structure 12.

In an example, the rigidity of the material of the abutment surface 14 varies along the abutment surface 14, not shown in Fig. 1.

The fastening area 16 can also be referred to as fixation point, fixation site, attachment point or site, fixing point, mounting point, or mount, or mounting, or fixture.

The term "fastening area" relates to a point that is able to receive a force in order to fix the body structure 12 at a predetermined position.

In an example, the at least one fastening area 16 is at the laminated structural member 22.

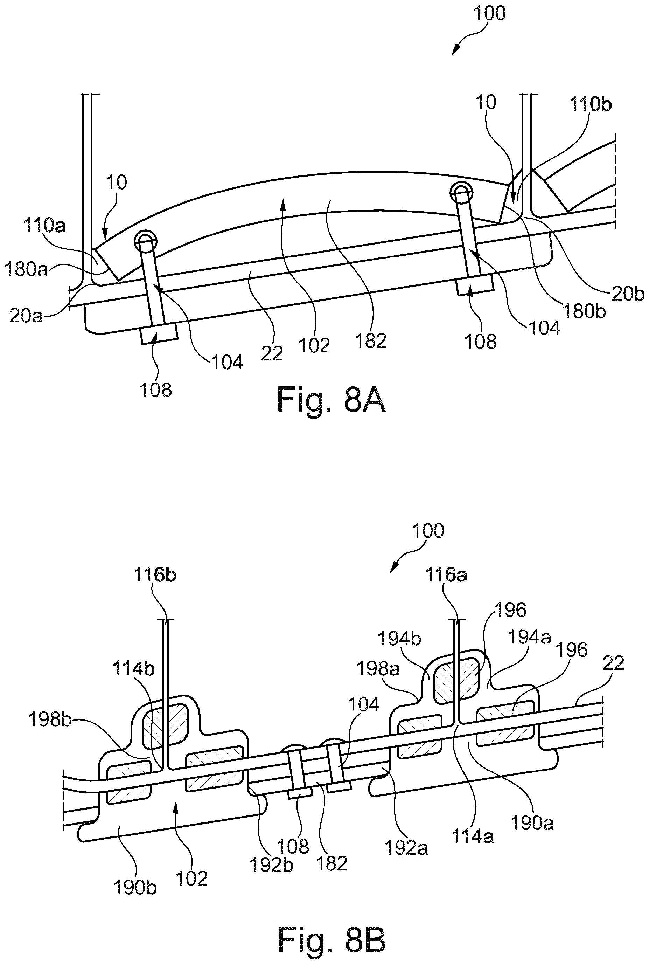

In an example, the at least one fastening area 16 is at the surface of the body structure 12 and configured to receive a support post, as shown further below in Figs. 8A and 8B, in order to hold the body structure 12 at a predetermined position.

In an example shown in Fig. 1, the at least one fastening area 16 can cover the whole surface 26 of the body structure 12. The surface of the body structure 12 opposes the abutment surface 14.

In an example, the at least one fastening area 16 comprises a hole penetrating the body structure 12 to take up the support post or a bolt 33, or a wire, not shown in Fig. 1.

In an example, the at least one fastening area 16 is configured to generate a preload or biasing holding or clamping force.

The term "first direction" can be referred to as y-direction in a cartesian coordinate system. The term "cross-sectional direction" can be referred to as x-direction in a cartesian coordinate system, perpendicular to the y-direction. The term "cross-sectional" refers to a cut through the body structure 12, transverse to the first direction that reveals a "cross-sectional" view on a round profile of the abutment surface 14 at the body structure 12, shown in Fig. 1.

The rounded contour section 18 can also be referred to as rounded profile or smooth profile.

The term "section" means an area at the body structure 12, on the surface of the body structure 12 or in the volume of the body structure 12.

In an example, the rounded contour comprises a curvature. The curvature is the amount by which the profile deviates from being a straight line, or the abutment surface 14 deviates from being a plane.

In an example, the rounded contour is described by a radius, not shown in Fig. 1.

In an example, the radius is reciprocal to the curvature of the rounded contour.

The concave edge section 20 can also be referred to as edge section or edge. It describes the inside of an edge, or a curve, capable of holding a volume. The term "convex edge section" refers to the outside not capable of holding a volume on the right side of Fig. 1.

In an example, the concave edge section 20 of Fig. 1 is yielded by bending or folding a plane out-of plane.

In an example, the concave edge section 20 is yielded by attaching the edge of a plate to the surface of another plate.

In an example, the concave edge section 20 is yielded by laminating layers with each other in a curved form.

In an example, the concave edge section 20 is yielded by connecting layers of different structural components via lamination.

In an example, the concave edge section 20 is a CFRP radius at the connection between different CFRP-based components, not shown in Fig. 1.

In an example, the concave edge section 20 is a CFRP radius between upper and lower skin and spars of a CFRP multispar box, not shown in Fig. 1.

In an example, the concave edge section 20 is a CFRP radius at a structural component of an aircraft, not shown in Fig. 1.

In an example, the concave edge section 20 is part of an integrally manufactured laminated structural member 22.

In an example, the concave edge section 20 is part of an integrally manufactured CFRP multispar box, not shown in Fig. 1.

In an example, the concave edge section 20 is part of a 2D fabric or comprises NCFs.

In an example, the body structure 12 is made from the same material as the concave edge section 20.

The term "conform" describes a geometrical condition of the abutment surface 14 that maximizes the interfacial contact surface between abutment surface 14 and concave edge section 20 in Fig. 1.

In an example, the abutment surface 14 is made to match or fit the concave edge section 20.

In an example, the abutment surface 14 comprises a layer of an elastic material to match with the edge section.

In an example, the abutment surface 14 snuggles into the concave edge section 20.

The term "laminated structural member" refers to a component that is made from interconnected layers.

In an example, the layers are interconnected by a resin, a polymer or any other adhesive substance.

In an example, the layers comprise any fiber material, organic and/or inorganic.

In an example, the laminated structural member 22 is a CFRP plate.

In an example, the laminated structural member 22 comprises NCFs and/or 2D fabric materials.

The term "secure" refers to fixing, conserving, preserving or freezing the orientation of the abutment surface 14 towards the concave edge section 20 in Fig. 1.

In an example, the body structure 12 comprises more than at least one fastening area 16, for example two or three, or up to five fastening areas.

In an example, the at least one fastening area 16 is configured to secure the abutment surface 14 against the concave edge section 20, by an element connecting the at least one fastening area 16 with the laminated structural member 22 or another structural component.

Fig. 2 schematically shows a cross-section of an example of a reinforcing device 10. The at least one fastening area 16 of the device comprises a bolt hole 28 along a bolt hole axis 30 and a holding section 32 for abutment of a bolt's part. The bolt hole axis 30 extends through the abutment surface 14. A bolt 33 is insertable into the bolt hole 28 to apply a holding force to the holding section 32 to secure the position of the abutment surface 14.

The term "bolt hole axis" can be used to describe the orientation of a bolt 33 towards the body structure 12. Though, it is intended that the orientation of the bolt 33 can vary along the bolt hole axis 30. The bolt hole axis 30 describes a rough tendency just and not exactly how the bolt 33 is oriented with the body structure 12 or the concave edge section 20.

In an example, the bolt hole 28 is configured as a depression in the body structure 12.

In an example, the bolt hole 28 is configured to proceed from the abutment surface 14 into the body structure 12, where it ends in the body structure 12 of Fig. 2.

In an example, the bolt hole 28 traverses the whole body structure 12.

In an example, the bolt hole 28 provides threads for mounting a screw.

In an example, the inner surface of the bolt hole 28 is configured to enhance frictional forces with a bolt 33.

In an example, the bolt hole 28 provides a form-locking connection for the bolt 33 of Fig. 2.

The holding section 32 can also be referred to as bolt connection portion.

In an example, the holding section 32 is a nut or a hook in the body structure 12.

In an example, the holding section 32 is configured to exert a preload force on the bolt 33 of Fig. 2.

In an example, the holding section 32 is formed out in the body structure 12 to enable a form-locking connection with the bolt's part.

In an example, the bolt 33 is a straight bolt.

In an example, the bolt 33 is configured to generate a preload force.

The bolt 33 is fixable to the laminated structural member 22. As an example, the bolt 33 is provided with a head on one end and a nut is mountable on the other end.

In an example, the nut is a barrel nut.

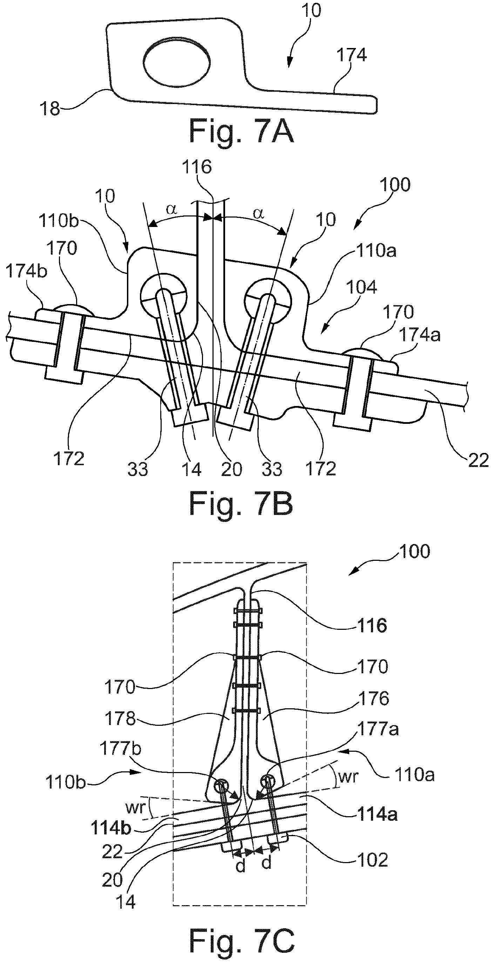

In an example, the bolt 33 does not secure or hold the abutment surface 14 directly against the concave edge section 20, not shown in Fig. 2 but demonstrated further below in Fig. 7B.

In an example of Fig. 2, the bolt hole 28 is formed such that its bolt hole axis 30 aligns with a bisecting diagonal 34 of the concave edge section 20. The bisecting diagonal 34 divides the concave edge section 20 through its apex area 36 into two parts 38a, 38b. The holding section 32 applies the holding force via the bolt 33 in the bolt hole 28 along the bisecting diagonal 34.

In an example, an opposing clamping force from the concave edge section 20 results from applying the holding force into the concave edge section 20, not shown in Fig. 2. The two parts of the concave edge section 20 clamping the body structure 12 via the abutment surface 14.

In an example, the bisecting line, respectively the bolt hole 28 splits the body structure 12 in two parts.

In an example, the apex area 36 is the focal point of compression forces in the concave edge section 20.

The term "apex area" does not necessarily describe the mathematical apex of the geometry of the concave edge section 20. It refers to an area at the edge section.

In an example, the body structure 12 and the abutment surface 14 are formed to focus the holding force directly on the apex area 36. Then the abutment surface 14 is configured to counteract a delamination force, not shown in Fig. 2, of the laminated structural member 22 with the holding force.

In an example, all parts of the reinforcing device 10 are configured towards focusing a holding force on the apex area 36 of the concave edge section 20.

The term "delamination force" can also be referred to as peeling force.

In an example, the concave edge section 20 comprises multiple layers that are interconnected by lamination, not shown in Fig. 2. The layers tend to delaminate at the concave edge section 20. The layers have a tendency or a prone to delaminate at the apex area 36. The apex area 36 exerts a delaminating force in a direction pointing from the convex edge section to the concave edge section 20. The delamination separates the layers that are held together by a connecting substance. The delamination forms cavities, not shown in Fig. 2, in the material at the apex area 36. The cavities lead to weakness of the material at the concave edge section 20 The abutment surface 14 counteracts the delamination by applying a counteracting force from the holding section 32 via the abutment surface 14 towards the apex area 36 to prevent the cavities.

In an example, the tendency of forming delamination and the kind of delamination depends on the kind of laminated structural member 22.

In an example, the reinforcing device 10 is configured to facilitate its dimensionability for counteracting peeling forces defined by the kind of laminated structural member 22.

In an example of Fig. 2, the transitions and edges 40 of the body structure 12 distal to the rounded contour section 18 are inclined and/or rounded to dissipate force transmission, represented by the arrows 42.

In an example, when load is introduced to the reinforcing device 10, sharp edges at the abutment surface 14 and a sudden decrease of rigidity might damage the laminated structural member 22.

In an example, an additional degree of freedom of the bolt 33 in the bolt holes prevents forced bending moments acting onto the bolts.

In an example, the abutment surface 14 cannot match the concave edge section 20 exactly due to local imperfections. To make the abutment surface 14 match, more tolerance is allowed in the orientation of the bolts by providing, e.g., cone-shaped bolt holes, not shown in Fig. 2.

In an example not shown in Fig. 2, the holding section 32 for abutment of the bolt's part comprises rotatable bolt suspensions in the body structure.

In an example, to compensate for imperfections along the concave edge section 20, the bolts are allowed to change their orientation within the body structure 12 through rotatable bolt suspensions.

As an advantage, the additional degree of freedom prevents forced bending moments acting onto the bolts.

As a further advantage, matching of the abutment surface 14 with the concave edge section 20 is improved.

In an example of Fig. 2, the holding section 32 for abutment of the bolt's part in the body structure 12 is formed to receive a barrel nut 44. The holding section 32 is configured to generate a preload force with the barrel nut 44 at a bolt 33.

In an example, the fastening setup comprises is a plate or a nut or a barrel nut 44.

In an example, the fastening element is provided at the bolt 33 and/or in the bolt hole 28 and/or at the body structure 12 and/or at the concave edge section 20 and/or at the laminated structural member 22.

In an example, the at least one bolt 33 abuts in the holding section 32 in the at least one reinforcing device 10 and proceeds through the abutment surface 14 and a bolt hole 28 in the concave edge section 20 to the convex edge section, where it is fastened with at least one fastening element, not shown in Fig. 2.

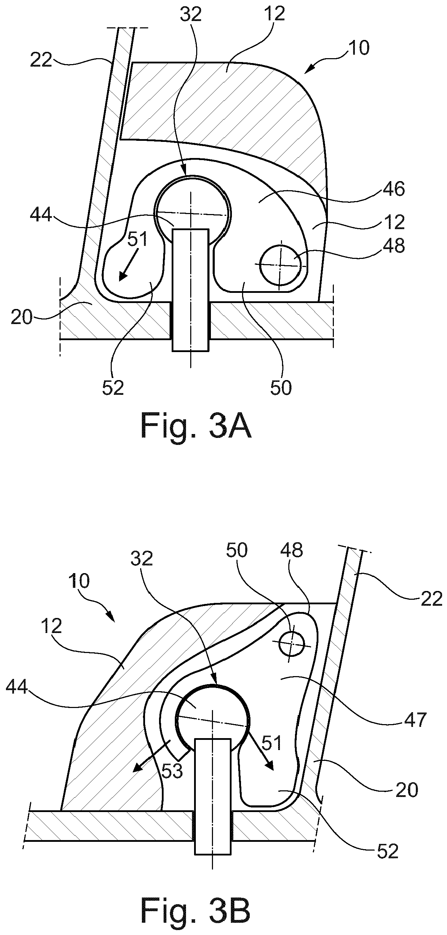

Figs. 3A and 3B schematically show cross-sections of examples of a reinforcing device 10 with holding sections configured as levers 46, 47.

In an example shown in Fig. 3A, the holding section 32 is formed as a lever 46, wherein the lever 46 has a rotatable mount 48 at a first end 50 to the body structure 12 of the at least one reinforcing device 10. The lever 46 is configured to receive the barrel nut 44 to hold, which is represented by arrow 51, its second end 52 distal to the first end 50 to the concave edge section 20 by the preload force.

In an example shown in Fig. 3B, the lever 47 is mounted to the body structure 12 by the rotatable mount 48 and formed to hold, which is represented by arrow 51, with the second end 52 against the concave edge section 20 and the area of the laminated structural member 22 opposite to the concave edge section 20, which is represented by arrow 53.

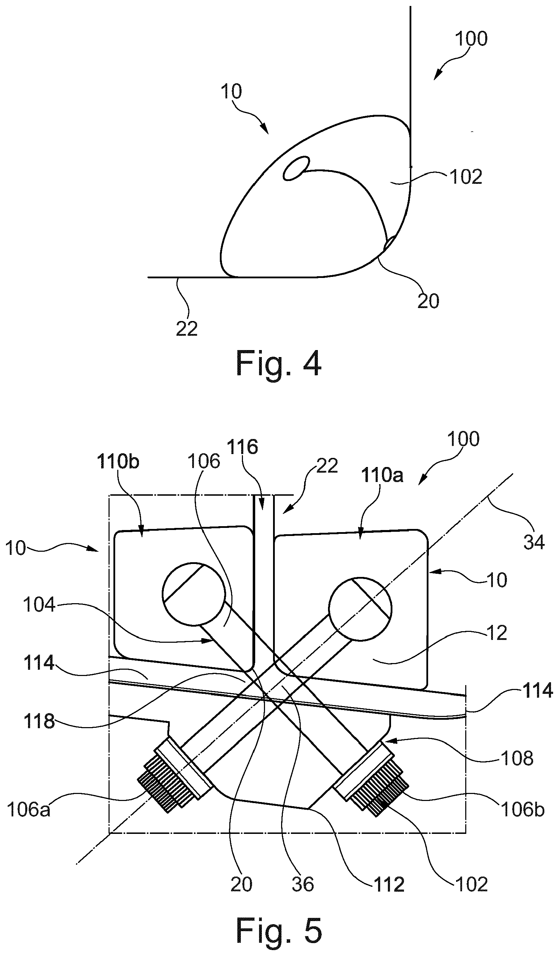

Fig. 4 schematically shows a general scheme of a cross-section of an example of a reinforcing arrangement 100. The reinforcing arrangement 100 comprises at least one reinforcing device 10 according to one of the preceding claims and at least one fastening setup 102. The at least one fastening setup 102 is configured to secure the at least one reinforcing device 10 against a concave edge section 20 of a laminated structural member 22.

In an example, more than one fastening setup 102 is deployed, for example, two, three or five or more.

Fig. 5 schematically shows a cross-section of an example of a reinforcing arrangement 100 with crossing bolts and a shared fastening element 112 as fastening setup 102. The at least one fastening setup 102 comprises a bolt structure 104 with a least one bolt 106 extending at least partly through the body structure 12 of the reinforcing device 10 and a fastening structure with at least one fastening element 108. The bolt structure 104 is configured to extend through a portion of the laminated structural member 22 and to be fastened by the at least one fastening element 108 at the laminated structural member 22 in order to hold the reinforcing device 10 against the concave edge section 20 of the laminated structural member 22.

In an example, variants of a reinforcing arrangement 100 are provided. As an example, they may have a long bore aligned with the long axis of the corner fitting in common. This bore houses a barrel nut 44, which transfers tension loads of tension bolts into the corner fitting. Some variants differ in the way the corner fittings are joined to the box and the outer fitting.

In an example, a variant the so-called "X-bolt concept" is provided. The bolt axis is aligned with the bisection line between the spar and lower skin. Thus, the contact force of the corner fitting is perfectly oriented to counteract the peel forces in the radii between spar and lower skin.

In an example of Fig. 5, the at least one bolt 106 extends through the body structure 12 along a bisecting diagonal 34 of the abutting concave edge section 20.

In an example of Fig. 5, two reinforcing devices 110a, 110b are provided. The bolt structure 104 comprises two bolts 106a, 106b. The at least one fastening element 108 is configured as a shared fastening element 112. The two reinforcing devices 110a, 110b are configured to be secured against each other at either side of abutting convex edge sections 114 that form a spar 116. The reinforcing devices 110a, 110b are fastened by the two bolts 106a, 106b to the shared fastening element 112 abutting the laminated structural member 22. The two bolts 106a, 106b protrude from either of the reinforcing devices 110a, 110b such that their bolt hole axes cross at a crossing point 118.

In an option of the example of Fig. 5, preferably, the crossing point 118 is at the apex area 36.

In an example, the two reinforcing devices 110a, 110b are configured to complement each other, as shown by Fig. 5.

The term "complement" means that the first and the second reinforcing device 110a, 110b complete each other in their function, force-flow, structure and shape to yield a uniform and synergistic effect on the abutting convex edge sections 114.

In an example, the first reinforcing device 110a is form-fitted to the concave edge section 20 of a large angle side of an inclined spar and the second reinforcing device 110b is form-fitted to a small angle side of the respective spar. The shapes of the first reinforcing device 110a and the second reinforcing device 110b, in Fig. 5, abut to fill out the full angle of 180°.

In an example, when mirroring a concave edge section 20, in an L-shape, with itself, an inverted T-shaped section is yielded from the laminated structural member 22. The up-right part of the T-shaped section can also be referred to as spar. The horizontal section can also be referred to as skin.

In an example, mirroring does not necessarily imply a mirror symmetry of the mirrored parts. It is simply meant as an operation of duplicating and aligning the duplicate. This implies that the up-right part, or the spar can also be inclined, as shown in Fig. 5.

In an example, the apex area 36 is located at the point where the up-right and the horizontal section meet.

In an example, a reinforcing device 110a, 110b is on either side of the spar, where the spar and the skin meet.

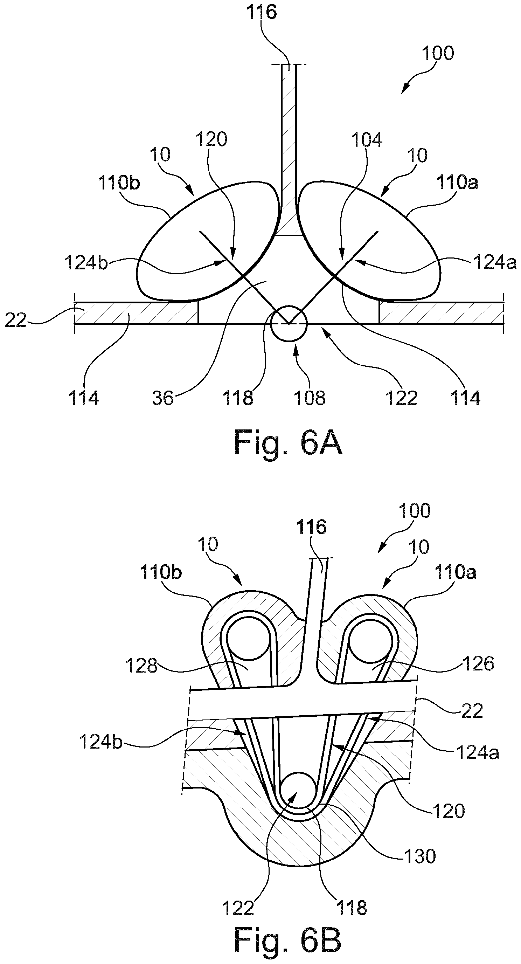

Fig. 6A schematically shows a general scheme of a cross-section of an example of a reinforcing arrangement 100 with a U-shaped bolt structure 120. The arrangement provides two reinforcing devices 110a, 110b. The bolt structure 104 comprises the U-shaped bolt structure 120. The at least one fastening element 108 is configured as a main fastening element 122. The two reinforcing devices 110a, 110b are configured to be secured against each other at either side of abutting convex edge sections 114 that form a spar 116. The U-shaped bolt structure 120 comprises fastening arms 124a, 124b. The fastening arms 124a, 124b extend from each of the reinforcing devices 110a, 110b and join at their crossing point 118 at the apex area 36, in an opposing direction to the spar 116. The U-shaped bolt structure 120 is configured to be fastened at the crossing point 118 by the main fastening element 122 at the laminated structural member 22, thereby exerting a holding force on the two reinforcing devices 110a, 110b.

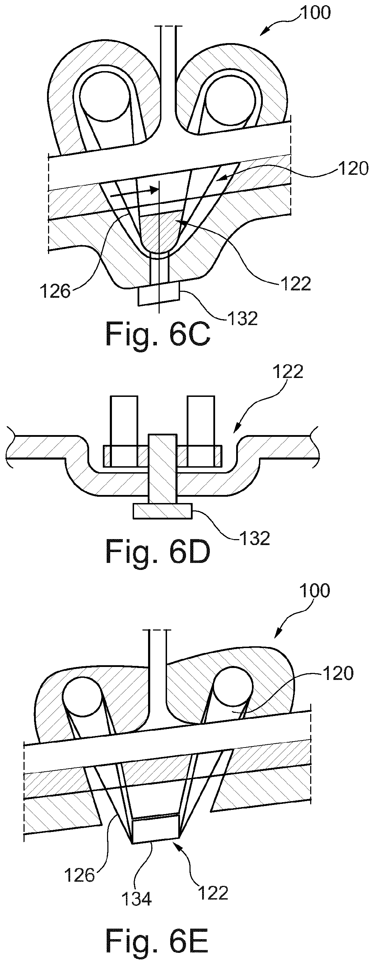

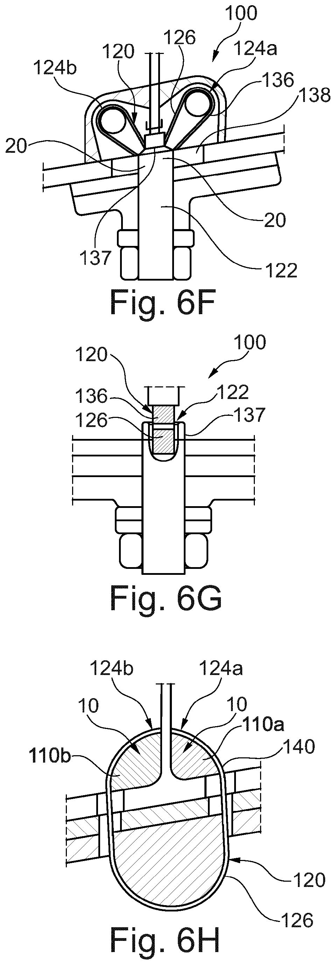

Figs. 6B, 6C, 6D, 6E, 6F, 6G and 6H schematically show cross-sections of examples of a reinforcing arrangement 100 with a U-shaped bolt structure 120 configured as flexible belt structure 126.

In an example shown in Fig. 6B, the U-shaped bolt structure 120 is a flexible belt structure 126. The fastening arms 124a, 124b are configured as flexible belt structure 126 that extends from each of the reinforcing devices 110a, 110b to join at the crossing point 118. The main fastening element 122 is configured for tensioning the flexible belt structure 126. The tensioning secures the two reinforcing devices 110a, 110b against each other at either side of abutting convex edge sections 114 that form a spar 116.

In an example shown in Fig. 6B, the flexible belt structure 126 is a steel belt 128.

In an example shown in Fig. 6B, the main fastening element 122 is an eccentric 130 tensioning the steel belt 128.

In an example shown in Fig. 6C, the main fastening element 122 is a tension bolt 132 tensioning the flexible belt structure 126. The tension bolt 132 is shown in Fig. 6D.

In an example shown in Fig. 6E, the main fastening element 122 is a wedge 134 tensioning the flexible belt structure 126.

In an example shown in Fig. 6F, the belt structure is a CFRP loop 136.

In an example, elasticity of the CFRP loop 136 is influenced by curing with a resin.

In an example shown in Fig. 6F, a fixing bolt 137 of the main fastening element 122 and the main fastening element 122 can be introduced by removing an area 138 of the concave edge section 20.

In an example shown in Fig. 6G, the main fastening element 122 comprises the fixing bolt 137.

In an example shown in Fig. 6H, the fastening arms 124a, 124b of the U-shaped bolt structure 120 join at the reinforcing devices 110a, 110b to form a closed O-shaped bolt structure 140.

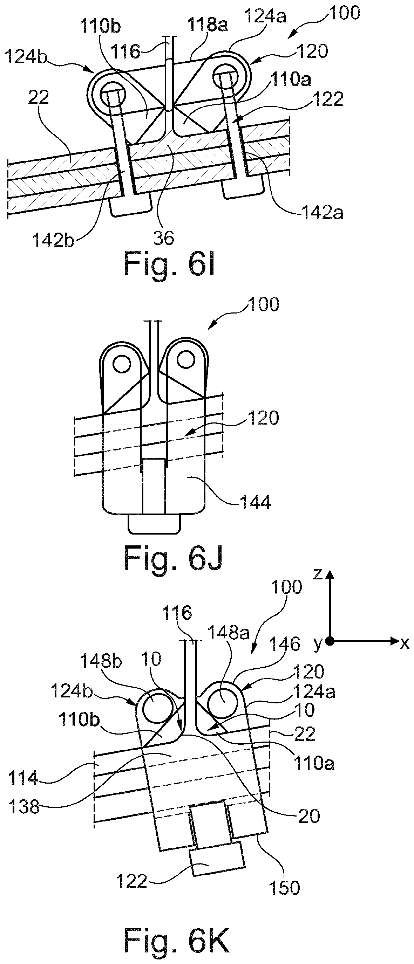

Fig. 6I schematically shows a cross-section of an example of a reinforcing arrangement 100 with a reversed U-shaped bolt structure 120. The fastening arms 124a, 124b of the U-shaped bolt structure 120 join at a crossing point 118a at the spar 116, opposite to the apex area 36 and the main fastening element 122 comprises reversed bolts 142a, 142b that secure the crossing point 118 against the laminated structural member 22. The reversed bolts 142a, 142b extend perpendicular through the laminated structural member 22. The crossing point 118a secures the two reinforcing devices 110a, 110b against each other at either side of abutting convex edge sections 114 that form the spar 116.

Fig. 6J schematically shows a cross-section of an example of a reinforcing arrangement 100 with a U-shaped bolt structure 120 configured as a U-bracket 144.

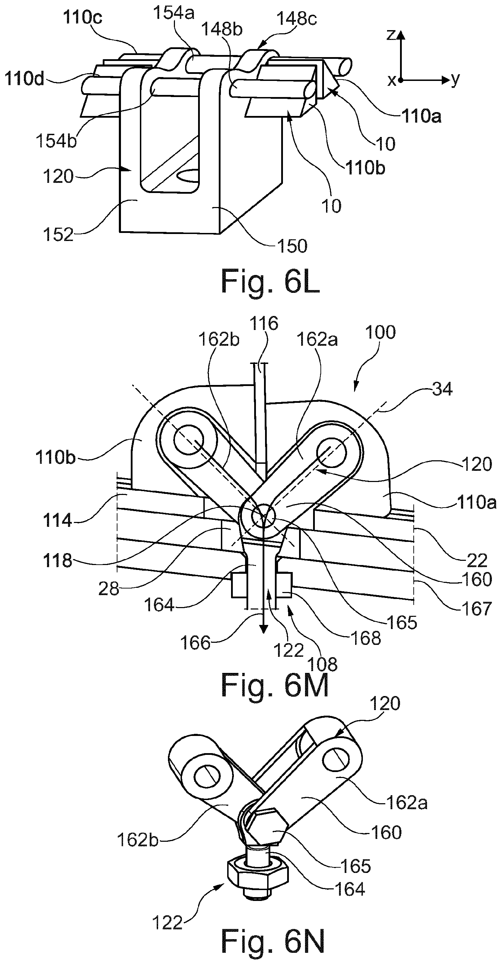

Figs. 6K and L, schematically show cross-sections in different directions of an example of a reinforcing arrangement 100 wherein the U-shaped bolt structure 120 is formed as a plate 146 and the fastening arms 124a, 124b are formed as fastening sites 148a, 148b. The reinforcing devices 110a, 110b extend from either of the fastening sites 148a, 148b to the concave edge section 20. The main fastening element 122 is configured to fasten the plate 146 at the end of the plate 150 opposite to the spar 116 at the laminated structural member 22 to secure the two reinforcing devices 110a, 110b against each other at either side of abutting convex edge sections 114 that form a spar 116.

In an example shown in Fig. 6L that is rotated with respect to the spar 116 in Fig. 6K, the end of the plate 150 protrudes in a transverse U-shape 152 transverse to the U-shaped bolt structure 120 in a direction to the spar 116. The end of the plate comprises neighboring fastening sites 154a, 154b. The neighboring fastening sites 154a, 154b are configured to be attached to another pair of neighboring reinforcing devices 110c, 110d at the same abutting convex edge sections 114 that form a spar 116.

Fig. 6M schematically shows a cross-section of an example of a reinforcing arrangement 100 wherein the U-shaped bolt structure 120 comprises Y-shaped bolt 160. Two reinforcing devices 110a, 110b are provided. The U-shaped bolt structure 120 comprises a Y-shaped bolt 160 shown in Fig. 6N. The at least one fastening element 108 is configured as a main fastening element 122 and the two reinforcing devices 110a, 110b are configured to be secured against each other at either side of abutting convex edge sections 114 that form a spar 116.

Fig. 6N schematically shows an example of the Y-shaped bolt 160.

The Y-shaped bolt 160 comprises bolt arms 162a, 162b and a main bolt 164. At reinforcing arrangement 100, shown in Fig. 6M, the bolt arms 162a, 162b extend along a bisecting diagonal 34 of the abutting concave edge section 20 from each of the reinforcing devices 110a, 110b and are joint at their crossing point 118 at the apex area 36, where they have a rotatable connection 165 to the main bolt 164. The main bolt 164 protrudes through a portion of the laminated structural member 22 in an opposing direction to the spar 116. The main bolt is configured as part of the main fastening element 122 at the laminated structural member 22, thereby exerting a holding force, demonstrated by branched arrow 166, on the two reinforcing devices 110a, 110b.

In an example, the Y-shaped bolt is provided as a so called "Y-bolt Concept", comprising mainly of three fittings, which are joined together by a central bolt, i.e., the main bolt 164. The central bolt allows the fittings and to rotate against each other. This additional degree of freedom prevents forced bending moments acting onto the inclined bolts of the "X-Bolt concept". Furthermore, the bolt joining the outer fitting, i.e., the main fastening element 122, to the Y-bolt can be oriented perpendicular to the lower skin of the abutting convex edge sections 114 which facilitates manual drilling.

As an advantage, the rotatable connection 165 at the crossing point 118 of the Y-shaped bolt prevents bending moments acting onto the inclined bolt arms 162a, 162b.

As an advantage, the rotatable connection 165 at the crossing point 118 of the Y-shaped bolt prevents bending moments acting onto the inclined bolt arms 162a, 162b.

In an example, the bolt hole 28 is formed such that its joint bolt hole is aligned with the mirror axis of the abutting convex edge sections 114.

In an example, the joint bolt hole 28 is formed for a main bolt.

In an example, the bolt hole 28 is formed such that its joint bolt hole is aligned with the spar 116.

In an example, the bolt hole 28 is configured to bear the Y-shaped bolt 160.

In an example, the main fastening element 122 further comprises at least one carrier structure 167 and at least one nut as part of the main fastening element 122. The main bolt 164 axis is inclined with respect to the carrier structure 167, while the main bolt 164 is aligned with an inclined spar. The main bolt 164 is fastened at the carrier structure 167 at a fixation area with the at least one nut. The carrier structure 167 in Fig. 6M comprises a recess 168 at the fixation area that provides an even and inclined abutment surface for the at least one nut that is oriented inclined with respect to the surface of the carrier structure 167.

Fig. 7A schematically shows an example of a reinforcing device 10 with a flange 174. The body structure 12 comprises at least one flange 174. The at least one flange 174 is provided at the body structure 12 distal to the rounded contour section 18. The at least one flange 174 is configured to hold the reinforcing device 10, in Fig. 7B, indirectly against the concave edge section 20 with the at least one shear rivet 170.

Fig. 7B schematically shows an example of a reinforcing arrangement 100 with reinforcing devices 110a, 110b having flanges 174 a, 174 b and shear rivets. The bolt structure 104 in Fig. 7B also comprises at least one shear rivet 170. The at least one bolt 33 and the at least one shear rivet 170 protrude, from the abutment surface 14 of the body structure 12 and are configured to protrude through a shared abutting surface 172 of the concave edge section 20 in order to hold the reinforcing device 10 at the concave edge section 20 of the laminated structural member 22.

In an example, the bolt axis of the at least one bolt 33 is inclined by the angle α with respect to the orientation of the spar in Fig. 7B in order to hold the reinforcing device 10 at the concave edge section 20 of the laminated structural member 22.

In an example, the angle α is larger or equal than 5°.

In an example, the at least one bolt 33 and the at least one shear rivet 170 protrude perpendicularly, from the abutment surface 14 of the body structure 12 which is not shown in Fig. 7B.

In an example, the at least one shear rivet 170 protrudes perpendicularly, from the abutment surface 14 of the body structure 12 and the bolt axis of the at least one bolt 33 is inclined by the angle α larger or equal than 5° with respect to the spar 116. In an example, the at least one flange 174a is configured to provide a fixation against shearing forces between the abutment surface 14 and the concave edge section 20 as shown in Fig. 7B.

In an example, the holding is provided in an indirect manner. The term "indirect" means that the bolts and the shear rivets, do not generate a holding force that is directly applied on the apex area 36 of the concave edge section 20 via the bisecting diagonal 34.

In an example, the force flow in Fig 7B is more characterized in that the bolts and the shear rivets hold, rather than press the reinforcing devices 110a, 110b against the spar 116.

In an example, the force flow is more characterized by a frictional force flow, than a preloaded force flow.

In an example, the holes for the bolts and the shear rivets through the abutting convex edge sections 114 follow the direction of the spar 166 and are perpendicular towards the abutting convex edge sections 114.

As an advantage, the reinforcing arrangement 100 with additional shear rivets facilitates the drilling of holes to fasten the reinforcing arrangement 100 at the laminated structural member 22.

In an example, the additional bolts provide for additional friction force to secure the abutment surface 14 against the concave edge section 20.

In an example, the additional bolts are shear rivets.

In an example, the at least one straight bolt and the at least one shear rivet 170 are fastened by fastening elements at the laminated structural section in order to hold the reinforcing device 10 indirectly against the concave edge section 20.

In an example the arrangement comprises:
- at least two straight bolts;
- at least two shear rivets;
- at least two fastening elements;
- at least two additional fastening elements; and
- at least two of the reinforcing devices 110a, 110b;

The at least two reinforcing devices 110a, 110b are configured to complement each other. The reinforcing devices 110a, 110b are configured to be indirectly hold at abutting convex edge sections 114 that form a spar 116 by:
- the at least two bolts fastened to the at least two fastening elements; and
- the at least two shear rivets fastened to the at least two additional fastening elements in addition. The reinforcing devices 110a, 110b are mirrored at the spar 116.

In a further example, the two reinforcing devices 110a, 110b further comprise flanges.

The reinforcing devices are configured to be indirectly secured at abutting convex edge sections 114 that form a spar 116 by:
- the at least two bolts fastened at the at least two fastening elements; and
- the at least two shear rivets at the flanges fastened at the at least two additional fastening elements.

In an example, an aircraft with a fuselage and an airframe structure having a propulsion system is provided. At least one of the fuselage and the airframe structure comprises a structural component comprising a laminated structural member 22 having a concave edge section 20. At least one reinforcing arrangement 100 according to one of previous examples is provided with the abutment surface 14 of the reinforcing device 10 abutting against the concave edge section 20. The airframe structure is attached to the fuselage, and both are configured to operate the aircraft. The at least one laminated structural member 22 is mounted to a functional unit of the fuselage and/ or the airframe structure via its concave edge section 20 by the at least one reinforcing system. The functional unit is configured to render the condition of the at least one laminated structural member 22 via the at least one reinforcing system, allowing for an operation of the aircraft. The at least one laminated structural member 22 is configured as one of the group comprising: flaps, ailerons, rudders and doors.

As an advantage, a more robust aircraft is yielded. As an advantage, force is applied more accurately to the components of the aircraft.

In an example, two, three or five laminated structural members and reinforcing arrangements are provided.

The term "reinforcing arrangement" can also be referred to as reinforcing system or reinforcement system.

In an example, the so-called "straight bolt corner fitting" variant is provided. The variant has straight bolts, which are oriented more or less perpendicular to the lower skin of the abutting convex edge sections 114. Therefore, the straight bolts are not able to counteract the peel force directly. To avoid that the corner fittings will be pushed sideways, an additional flange for an additional shear rivet is added to the corner fitting.

Fig. 7C schematically shows an example of a reinforcing arrangement 100 with perpendicular flanges 176, 178 abutting an example of the spar 116. The perpendicular flange 176 is formed to extend along the spar 116 of one of the abutting convex edge sections 114a. The perpendicular flange 176 is configured to be connected to another perpendicular flange 178 formed to extend along the spar 116 of the other abutting convex edge section 114b. Both flanges are connected through the spar 116 by a multiplicity of the at least one shear rivet 170.

In an example of Fig. 7C, wedge-like recesses, indicated by angle *wr,* are provided between the abutment surface 14 and the laminated structural member 22, opposite to the spar 116. The wedge-like recesses *wr* are tapered towards the concave edge section 20. The wedge-like recesses *wr* and the distance d, indicated by the arrows d, are both configured to steer the orientation of forces, indicated by arrows 177a and 177b, that secure the reinforcing devices 110a, 110b against the concave edge section 20.

Fig. 8A schematically shows an example of a reinforcing arrangement 100 with at least one support post 182. The reinforcing arrangement 100 comprises at least two reinforcing devices 110a, 110b. Each of the at least two reinforcing devices 110a, 110b provides a fastening area formed to receive a support post 180a, 180b. The reinforcing arrangement 100 comprises a fastening setup 102 comprising at least one support post 182, a bolt structure 104 and fastening elements 108. The at least one support post 182 is fastened to the laminated structural member 22 by the bolt structure 104 and the fastening elements 108. The at least one support post 182 is configured to hold one of the at least two reinforcing devices 110a to a concave edge section 20a by the other of the at least two reinforcing devices 110b abutting to an opposing concave edge section 20b.

In an example, the at least one support post 182 is a dovetail joint.

Fig. 8B schematically shows an example of the reinforcing arrangement 100 with a support post 182 and magnetic reinforcing devices 194a, 194b. The fastening setup 102 further comprises magnetic main fastening elements 190a, 190b. The magnetic main fastening elements 190a, 190b provide fastening areas 192a, 192b for the support post. The magnetic reinforcing devices 194a, 194b comprise magnetic elements 196. The magnetic reinforcing devices 194a, 194b are configured to be secured against each other at either side of abutting convex edge sections 114a that form a first spar 116a by their magnetic attraction forces and the magnetic attraction force of the magnetic main fastening element 190a to form a magnetic triangle 198a. The support post is configured to hold the magnetic triangle at the first spar 116a by the magnetic main fastening element 190a against another magnetic main fastening element 190b of another magnetic triangle 198b at a second spar 116b of abutting convex edge sections 114b.

As an advantage, magnetic attraction forces omit drilling bolt holes in the laminated structural member 22 for fastening of bolts by preload forces.

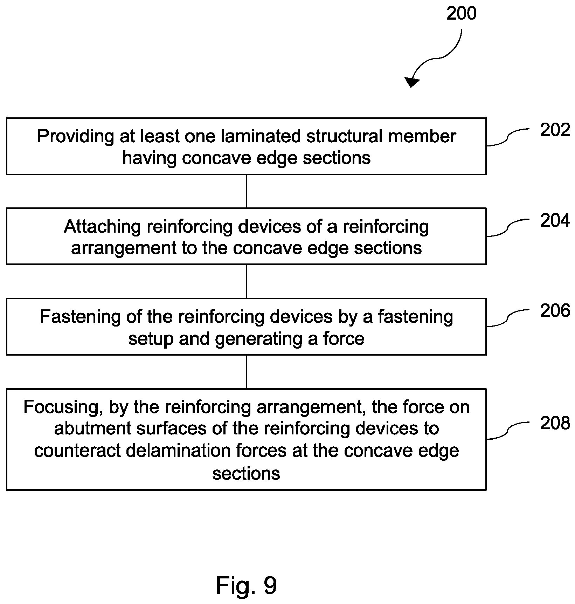

Fig. 9 shows basic steps of an example of a method 200 for introducing loads to a laminated structural member under preservation of its structural integrity. The method 200 comprises the following steps:
- In a first step 202, at least one laminated structural member having concave edge sections is provided.
- In a second step 204, reinforcing devices of a reinforcing arrangement are attached to the concave edge sections.
- In a third step 206, the reinforcing devices are fastened by a fastening setup and generate a force.
- In a fourth step 208, by the reinforcing arrangement, the force is focused on abutment surfaces of the reinforcing devices to counteract delamination forces at the concave edge sections.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A reinforcing device (10), comprising a body structure (12) having:
- an abutment surface (14); and
- at least one fastening area (16);
wherein the abutment surface extends along a first direction;
wherein in a cross-sectional direction, transverse to the first direction, the abutment surface comprises a rounded contour section (18) such that the abutment surface is configured to conform with a concave edge section (20) of a laminated structural member (22);
wherein the at least one fastening area is provided at the body structure opposite to the abutment surface; and
wherein the at least one fastening area is configured to secure the abutment surface against the concave edge section of the laminated structural member.

2. Device according to claim 1, wherein the at least one fastening area comprises a bolt hole (28) along a bolt hole axis (30) and a holding section (32) for abutment of a bolt's part;
wherein the bolt hole axis extends through the abutment surface; and
wherein a bolt (33) is insertable into the bolt hole to apply a holding force to the holding section to secure the position of the abutment surface.

3. Device according to claim 2, wherein the bolt hole is formed such that its bolt hole axis aligns with a bisecting diagonal (34) of the concave edge section;
wherein the bisecting diagonal divides the concave edge section through its apex area (36) into two parts (38a, 38b); and
wherein the holding section applies the holding force via the bolt in the bolt hole along the bisecting diagonal.

4. Device according to one of the preceding claims, wherein the transitions and edges (40) of the body structure distal to the rounded contour section are inclined and/or rounded to dissipate force transmission.

5. Device according to one of the preceding claims, wherein the holding section for abutment of the bolt's part comprises rotatable bolt suspensions in the body structure.

6. Device according to one of the preceding claims, wherein the holding section for abutment of the bolt's part in the body structure is formed to receive a barrel nut (44); and
wherein the holding section is configured to generate a preload force with the barrel nut at a bolt.

7. A reinforcing arrangement (100), comprising:
- at least one reinforcing device (10) according to one of the preceding claims; and
- at least one fastening setup (102);
wherein the at least one fastening setup is configured to secure the at least one reinforcing device against a concave edge section of a laminated structural member.

8. Arrangement according to claim 7, wherein the at least one fastening setup comprises:
- a bolt structure (104) with a least one bolt (106) extending at least partly through the body structure of the reinforcing device; and
- a fastening structure with at least one fastening element (108);
wherein the bolt structure is configured to extend through a portion of the laminated structural member and to be fastened by the at least one fastening element at the laminated structural member in order to hold the reinforcing device against the concave edge section of the laminated structural member.

9. Arrangement according to claim 8, wherein the at least one bolt extends through the body structure along a bisecting diagonal of the abutting concave edge section.

10. Arrangement according to claim 8, wherein two reinforcing devices (110a, 110b) are provided;
wherein the bolt structure comprises two bolts (106a, 106b);
wherein the at least one fastening element is configured as a shared fastening element (112);
wherein the two reinforcing devices are configured to be secured against each other at either side of abutting convex edge sections (114) that form a spar (116);
wherein the reinforcing devices are fastened by the two bolts to the shared fastening element abutting the laminated structural member;
wherein the two bolts protrude from either of the reinforcing devices such that their bolt hole axes cross at a crossing point (118); and
wherein the crossing point is at the apex area.

11. Arrangement according to claim 9, wherein two reinforcing devices are provided;
wherein the bolt structure comprises a U-shaped bolt structure (120);
wherein the at least one fastening element is configured as a main fastening element (122); and
wherein the two reinforcing devices are configured to be secured against each other at either side of abutting convex edge sections that form a spar;
wherein the U-shaped bolt structure comprises fastening arms (124a, 124b);
wherein the fastening arms extend from each of the reinforcing devices and join at their crossing point at the apex area, in an opposing direction to the spar; and
wherein the U-shaped bolt structure is configured to be fastened at the crossing point by the main fastening element at the laminated structural member, thereby exerting a holding force on the two reinforcing devices.

12. Arrangement according to claim 8, wherein the bolt structure also comprises at least one shear rivet (170);
wherein the at least one bolt and the at least one shear rivet protrude from the abutment surface of the body structure and are configured to protrude through a shared abutting surface (172) of the concave edge section in order to hold the reinforcing device at the concave edge section of the laminated structural member.

13. Arrangement according to claim 12, wherein the body structure comprises at least one flange (174);
wherein the at least one flange is provided at the body structure distal to the rounded contour section; and
wherein the at least one flange is configured to hold the reinforcing device indirectly against the concave edge section with the at least one shear rivet.

14. Arrangement according to claim 7, wherein at least two reinforcing devices are provided;
wherein each of the at least two reinforcing devices provides a fastening area formed to receive a support post (180a, 180b);
wherein the fastening setup comprises:
- at least one support post (182);
- a bolt structure; and
- fastening elements;
wherein the at least one support post is fastened to the laminated structural member by the bolt structure and the fastening elements; and
wherein the at least one support post is configured to hold one of the at least two reinforcing devices to a concave edge section by the other of the at least two reinforcing devices abutting to an opposing concave edge section.

15. A method (200) for introducing loads to a laminated structural member under preservation of its structural integrity, comprising the following steps:
- Providing (202) at least one laminated structural member having concave edge sections;
- Attaching (204) reinforcing devices of a reinforcing arrangement to the concave edge sections;
- Fastening (206) of the reinforcing devices by a fastening setup and generating a force; and
- Focusing (208), by the reinforcing arrangement, the force on abutment surfaces of the reinforcing devices to counteract delamination forces at the concave edge sections.
